(19) Europäisches Patentamt

European Patent Office

Office européen des brevets

(11) **EP 0 988 883 B1**

(12) **FASCICULE DE BREVET EUROPEEN**

(45) Date de publication et mention
de la délivrance du brevet:
**24.05.2006 Bulletin 2006/21**

(51) Int Cl.:
**B01D 53/047** (2006.01)    **B01D 53/053** (2006.01)

(21) Numéro de dépôt: **99402263.0**

(22) Date de dépôt: **15.09.1999**

(54) **Procédé de traitement d'un mélange gazeux par adsorption à modulation de pression, à débit variable de production**

Verfahren zur Behandlung von Gasen mittels Druckwechseladsorption mit variabler Produktion

Process for gas treatment by pressure swing adsorption with variable production

(84) Etats contractants désignés:
**DE ES IT NL SE**

(30) Priorité: **25.09.1998 FR 9812020**

(43) Date de publication de la demande:
**29.03.2000 Bulletin 2000/13**

(73) Titulaire: **L'air Liquide, S.A. à Directoire et Conseil de**
**Surveillance pour l'Etude et l'Exploitation des Procédés Georges Claude**
**75321 Paris Cedex 07 (FR)**

(72) Inventeur: **Monereau, Christian**
**75011 Paris (FR)**

(74) Mandataire: **Pittis, Olivier et al**
**L'Air Liquide S.A.**
**75, quai d'Orsay**
**75321 Paris Cedex 07 (FR)**

(56) Documents cités:
**EP-A- 0 819 463**    **EP-A- 0 821 992**
**DE-U- 29 605 889**    **US-A- 5 529 607**

**Description**

La présente invention est relative à un procédé de traitement d'un mélange gazeux par adsorption à modulation de pression (Pressure Swing Adsorption ou PSA), du type dans lequel on utilise au moins deux adsorbeurs, et où, dans chaque adsorbeur on effectue, pour une production nominale donnée, un cycle comprenant les étapes successives suivantes :

- une phase de production par admission à co-courant du mélange dans l'adsorbeur et récupération d'une fraction enrichie en composés les moins adsorbables, pour fourniture à une conduite de gaz de production, phase au cours de laquelle la pression maximale PM du cycle est atteinte ;
- une phase de régénération comportant au moins une étape de dépressurisation incluant une étape d'équilibrage avec un autre adsorbeur en phase de repressurisation et au cours de laquelle est atteinte la pression minimale Pm du cycle;
- une phase de repressurisation de l'adsorbeur jusqu'à la pression initiale de la phase de production; et
- l'une au moins des pressions extrêmes PM et Pm du cycle étant sensiblement différente de la pression atmosphérique.
- dans lequel, lors d'une réduction du débit de production, on ajoute au cycle au moins un temps mort au cours duquel l'adsorbeur est isolé.

Un procédé de ce type est connu du document EP-A-0 819 463 qui décrit l'aménagement de temps morts épisodiques entre l'étape d'équilibrage inter-adsorbeurs et l'étape finale de pressurisation / dépressurisation.

La présente invention s'applique en particulier aux cycles transatmosphériques de production d'oxygène impur, ayant typiquement une pureté de l'ordre de 90 à 95%, à partir d'air atmosphérique. Ce gaz de production sera appelé « oxygène » dans la suite.

Les pressions dont il est question ici sont des pressions absolues.

Les cycles d'adsorption précités sont mis en oeuvre dans des installations PSA qui comportent un nombre de vannes important ayant une fréquence d'ouverture / fermeture élevée. permettent d'obtenir le cycle de pression prévu, on conçoit aisément que le dysfonctionnement d'une de ces vannes qui sont manoeuvrées à chaque cycle, peut causer de graves problèmes dans le fonctionnement d'une installation PSA.

A titre d'exemple, il convient de distinguer en particulier deux cas de dysfonctionnement concernant les vannes :

1) Un premier dysfonctionnement peut consister en un blocage mécanique de la vanne, résultant en ce que soit la vanne reste fermée malgré une commande d'ouverture imposée (ou l'inverse), soit elle ne s'ouvre ou se ferme que très lentement.

De tels incidents peuvent être détectés par des capteurs de fin de course installés au niveau des vannes et éventuellement liés à des temporisations.

De plus, étant donné que ce type de dysfonctionnement cause généralement d'importants déséquilibres dans le cycle de pression des différents adsorbeurs, un tel incident est relativement facile à identifier.

2) Un second dysfonctionnement peut résulter d'un défaut d'étanchéité d'une vanne fermée, ce qui conduit à des fuites internes soit entre adsorbeurs, soit entre un adsorbeur et la ligne de production ou la ligne de résiduaire.

Contrairement au blocage mécanique, les fuites d'une vanne fermée non étanche sont difficiles à déceler sur une unité en fonctionnement.

Elles se traduisent néanmoins par une baisse des performances de l'installation PSA qui sont dues soit à un fonctionnement déséquilibré des adsorbeurs, soit directement à une perte de production vers la ligne de gaz résiduaire.

Pour déceler les vannes présentant en position de fermeture un défaut d'étanchéité, on profite classiquement des arrêts périodiques d'entretien de l'installation pour effectuer des tests d'étanchéité.

Mais ces contrôles présentent l'inconvénient qu'ils sont longs et fastidieux. De plus, compte tenu des durées d'arrêt de l'installation, ces contrôles ne peuvent être réalisés qu'à des intervalles de temps espacés. l'installation, ces contrôles ne peuvent être réalisés qu'à des intervalles de temps espacés.

Or, étant donné que la perte de production causée par un défaut d'étanchéité d'une vanne et se traduisant par une baisse de quelques % du rendement d'extraction peut durer quelques mois, le manque à gagner peut être important.

L'invention a pour but de fournir un procédé PSA, typiquement à mode transatmosphérique, permettant une adaptation économique à un débit de production variable, ainsi qu'un contrôle facile de l'étanchéité des vannes.

A cet effet, l'invention a pour objet un procédé du type précité, caractérisé en ce que le temps mort est ajouté sensiblement à au moins une pression extrême PM et/ou Pm du cycle.

Le procédé suivant l'invention peut comporter une ou plusieurs des caractéristiques suivantes, prises isolément ou suivant toutes leurs combinaisons possibles :

- lors de la réduction de débit, on ajoute un temps mort sensiblement à la pression maximale PM du cycle, typiquement immédiatement à la suite de la phase de production;
- lors de la réduction de débit, on ajoute un temps mort sensiblement à la pression minimale Pm du cycle, typiquement immédiatement avant la phase de repressurisation;
- on surveille la pression de l'adsorbeur pendant au moins un temps mort d'au moins certains cycles;
- le procédé utilise deux adsorbeurs et, lors de ladite réduction du débit de production, on ajoute au cycle deux temps morts concomitants ayant la même durée;

Un exemple de mise en oeuvre de l'invention va maintenant être décrit en regard des dessins annexés, sur lesquels :

- la Figure 1 représente schématiquement une installation PSA à laquelle est appliquée l'invention;
- la Figure 2 représente un cycle préféré mis en oeuvre dans cette installation pour le débit nominal de production; et
- la Figure 3 représente le cycle mis en oeuvre pour un débit réduit de production; et
- La Figure 4 illustre la régulation du flux d'oxygène fourni à l'utilisateur.

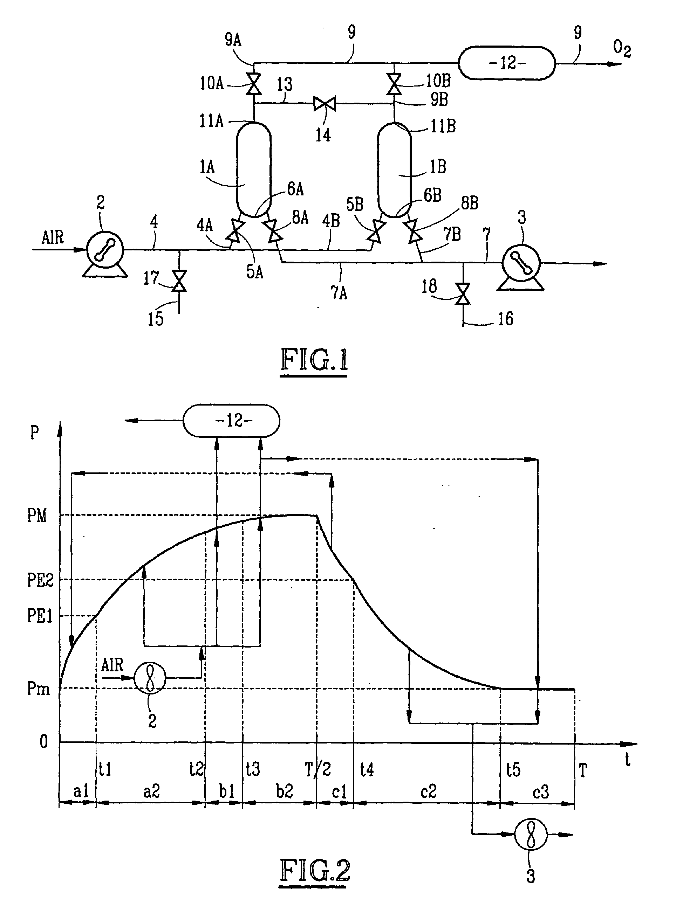

L'installation représentée à titre d'exemple à la Figure 1 convient tout particulièrement à la production d'oxygène, notamment d'oxygène dit impur (appelé "oxygène" dans un but de simplicité), à une teneur de préférence comprise entre 90 et 95% environ, à partir d'air atmosphérique.

Dans l'exemple représenté, l'installation comprend essentiellement deux adsorbeurs 1A et 1B, un compresseur ou une soufflante 2, une pompe à vide 3 et un ensemble de conduites et de vannes, ainsi que des moyens de commande et de régulation non représentés, adaptés pour mettre en oeuvre le cycle décrit plus loin. Le compresseur et la pompe sont des machines volumétriques du type "Roots", et tournent en permanence à vitesse constante.

On a schématisé sur la Figure 1 :

- une conduite 4 d'alimentation en air atmosphérique, qui part du refoulement du compresseur 2 et qui se divise en deux branches 4A, 4B munies de vannes d'alimentation respectives 5A, 5B et reliées respectivement à l'entrée inférieure 6A, 6B des adsorbeurs;
- une conduite 7 de purge/élution qui se divise en deux branches 7A, 7B munies de vannes de purge/élution 8A, 8B et partant respectivement des entrées 6A, 6B des adsorbeurs;
- une conduite 9 de production qui se divise en deux branches 9A, 9B munies de vannes de production 10A, 10B et partant respectivement des sorties supérieures 11A, 11B des adsorbeurs. Une capacité-tampon 12 est montée dans la conduite 9; et
- une conduite 13 d'équilibrage/élution qui relie directement entre elles les sorties 11A et 11B et qui est munie d'une vanne d'équilibrage/élution 14.

L'aspiration du compresseur 2 et le refoulement de la pompe à vide 3 sont en communication permanente avec l'atmosphère environnante. Les adsorbeurs 1A à 1B contiennent chacun au moins un lit d'un adsorbant adapté pour adsorber sélectivement l'azote de l'air, qui est dans cet exemple un tamis moléculaire de type CaA ou une zéolite échangée au lithium. De plus, des by-pass 15 et 16, munis d'une vanne respective 17, 18, sont respectivement piqués sur les conduites 4 et 7, juste en aval du compresseur 2 et juste en amont de la pompe 3. Ces by-pass débouchent dans l'atmosphère environnante.

Au moyen de l'installation ainsi décrite, on met en oeuvre par exemple le cycle d'adsorption à variation de pression transatmosphérique préféré illustré sur la Figure 2 pour le débit nominal d'oxygène produit.

Sur cette Figure 2, où les temps t sont portés en abscisses et les pressions absolues P en ordonnées, les traits orientés par des flèches indiquent, de façon classique, les mouvements et destinations des courants gazeux.

Dans l'exemple considéré, la pression haute PM du cycle est nettement supérieure à la pression atmosphérique et choisie égale à 1,40 bar, tandis que la pression basse Pm du cycle est nettement inférieure à la pression atmosphérique et est choisie égale à 0,4 bar.

Le cycle sera décrit ci-dessous pour un adsorbeur, à savoir l'adsorbeur 1A, et pour le débit nominal de production d'oxygène. L'autre adsorbeur 1B suit un cycle identique mais décalé dans le temps d'une demi-période T/2.

Le cycle représenté est constitué des étapes successives suivantes :

(a) Phase de recompression :

(a1) De t=0 à t1, une étape de première recompression à contre-courant par équilibrage partiel de pressions avec l'autre adsorbeur en cours d'étape (c1) de première décompression à co-courant décrite plus loin. A l'instant t1, la pression est remontée à une valeur intermédiaire PE1.

(a2) De t1 à t2, une étape de recompression finale à co-courant au moyen d'air provenant du compresseur. A l'instant t2, la pression est généralement voisine ou un peu supérieure à la valeur de la pression dans la capacité 12.

(b) <u>Phase de production:</u>
De t2 à t3, une première étape d'adsorption à co-courant, dans laquelle l'air à traiter est introduit via la conduite 4 à l'entrée de l'adsorbeur et circule à co-courant à travers celui-ci. L'oxygène de production est soutiré à la sortie de l'adsorbeur et envoyé dans la conduite de production 9.

(b2) De t3 à T/2, une seconde étape d'adsorption à co-courant, qui ne diffère de la précédente que par le fait qu'une fraction de l'oxygène produit est prélevée à la sortie de l'adsorbeur et est envoyée à contre-courant dans l'autre adsorbeur en phase de purge/élution (c3) décrite plus loin. La pression PM est généralement atteinte en fin de cette étape.

(c) <u>Phase de régénération de l'adsorbant :</u>

(c1) De T/2 à t4, une étape de première décompression à co-courant par équilibrage partiel de pressions avec l'autre adsorbeur en étape de première recompression à contre-courant (a1) décrite ci-dessus, via sa sortie de production. Au cours de cette étape, la pression de l'adsorbeur tombe de PM à une valeur intermédiaire PE2 > PE1 (ou en variante, PE2=PE1).
(c2) De t4 à t5, une étape de purge à contre-courant avec mise sous vide. Au cours de cette étape, l'entrée de l'adsorbeur est reliée à la pompe à vide, qui amène la pression sensiblement à la pression basse du cycle Pm et qui évacue les gaz aspirés dans l'atmosphère.
(c3) De t5 à T, une phase de purge/élution au voisinage de la pression basse Pm. Au cours de cette étape, l'entrée de l'adsorbeur est encore reliée à la pompe à vide, et, simultanément, sa sortie est reliée à celle de l'autre adsorbeur, qui se trouve en seconde étape d'adsorption (b2).

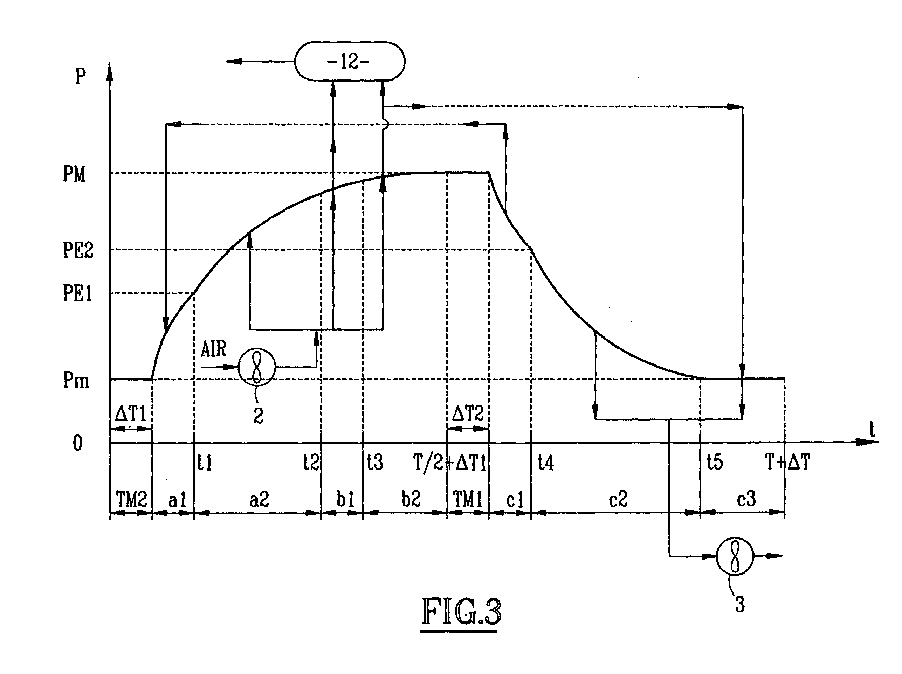

La Figure 3 illustre une modification du cycle de la Figure 2 pour un débit de production réduit. Dans l'exemple représenté, cette modification consiste uniquement en un allongement de la durée T du cycle par introduction de deux temps morts, notés TM1 et TM2, l'un (TM1) immédiatement à la suite de la dernière étape d'adsorption (b2), et l'autre (TM2) immédiatement avant la première étape de repressurisation (a1). Au cours de chaque temps mort, l'adsorbeur est isolé, c'est-à-dire que toutes les vannes reliées à son entrée et à sa sortie sont fermées, et la machine correspondante, à savoir le compresseur 2 pour TM1 et la pompe 3 pour TM2, est mise en marche à vide via son by-pass 15 ou 16.
Ainsi, le temps mort TM1 est prévu lorsque l'adsorbeur est à la pression haute PM, tandis que le temps mort TM2 est prévu lorsque l'adsorbeur est à la pression basse Pm. De plus, si $\Delta$T1 et $\Delta$T2 désignent les durées des deux temps morts, le cycle est allongé d'une durée totale $\Delta T = \Delta T1 + \Delta T2$.
On notera que dans le cas de l'exemple décrit, du fait du décalage de phase entre adsorbeurs d'un demi-temps de cycle, les deux temps morts sont concomitants, c'est-à-dire simultanés et de durée égale. Pendant que l'adsorbeur 1A est dans le temps mort TM1, l'adsorbeur 1B est dans le temps mort TM2 et vice-versa.
Cette modification du cycle a pour effet de diminuer le débit global de production en diminuant le nombre de cycles par heure, sans modifier la production de chaque cycle. Ainsi, si DN est le débit nominal d'oxygène produit, le débit réduit DR est tel que :

$$DR(T + \Delta T) = DN \times T \qquad\qquad\qquad (1)$$

Cette formule permet de calculer automatiquement la durée $\Delta$T en fonction du débit réduit demandé :

$$\Delta T = T \times (DN-DR)/DN \qquad\qquad\qquad (2)$$

La durée $\Delta$T (qui peut varier au cours du temps avec les variations du débit d'oxygène demandé) peut être prise en compte immédiatement, c'est-à-dire agir sur le cycle en cours ou le suivant, ou après un certain délai suivant la mesure du débit DR, afin de vérifier qu'il ne s'agit pas d'une simple fluctuation du débit d'oxygène consommé.
Si la pureté de l'oxygène produit doit rester dans des limites étroites, on peut, en variante, modifier le procédé comme suit : on mesure la pureté de l'oxygène produit et, si l'on constate une modification, par exemple une dégradation, excessive de cette pureté dans la marche réduite décrite ci-dessus, on corrige la valeur de $\Delta$T obtenue par la formule (2) dans le sens qui rétablit la pureté nominale, c'est-à-dire on réduit ΔT.

En pratique, cette correction ne constitue qu'une faible fraction de ΔT. Par exemple, lors d'une réduction du débit de 20%, la formule (2) donne ΔT = O,2T, soit, pour un cycle de 2 x 50 secondes, ΔT = 2 x 10 secondes. Si l'on constate un passage de la pureté de 90% à 89%, une modification de ΔT à 2 x 9 secondes permet de rétablir la pureté pratiquement à 90%.

Cette correction peut facilement se faire de façon automatique.

Par ailleurs, au cours de certains cycles au moins, par exemple à des intervalles de temps prédéterminés, on mesure en permanence la pression des adsorbeurs et de la capacité-tampon pendant les temps morts. Si cette pression varie, c'est-à-dire diminue pour le temps mort TM1 et/ou augmente pour le temps mort TM2, on en déduit que l'une des vannes correspondantes fuit.

Par exemple, si l'adsorbeur 1A est à la pression basse Pm et que sa pression remonte pendant le temps mort TM2, alors que la pression de l'adsorbeur 1B reste stable et que celle de la capacité-tampon varie normalement, on en déduit que la vanne d'air 4A ou de vide 8A de l'adsorbeur 1A fuit.

Le contrôle de la variation de la pression dans les adsorbeurs peut être effectué de façon automatique, et une alarme peut être produite si cette variation est supérieure à une valeur fixée au départ.

Il est à noter que grâce au fait que le contrôle de pressions s'effectue aux instants du cycle où les pressions dans les adsorbeurs sont les plus éloignées d'une part de la pression atmosphérique, et d'autre part entre elles, la précision de ce contrôle est maximale.

Le fait de prévoir un temps mort, en marche réduite, immédiatement après la phase de production présente un autre avantage important.

En effet, la capacité-tampon 12 fonctionne entre une pression haute PHC voisine de la pression haute PM du cycle et la pression basse minimale PBC à laquelle on doit fournir le gaz à l'utilisateur. Le calcul montre qu'en marche réduite à 50%, le volume de capacité-tampon nécessaire est supérieur de 40% au volume nécessaire pour la marche nominale, l'augmentation atteignant 60% pour une marche réduite à 25%.

Si on ne veut pas augmenter le volume de la capacité-tampon dans de telles proportions, on est amené à accroître sensiblement la pression haute du cycle, ce qui se fait au détriment de la consommation énergétique.

Dans une variante du procédé décrit plus haut, l'adsorbeur est laissé en communication avec la capacité-tampon, via la vanne 10A ou 10B, pendant au moins une partie du temps mort TM1.

Le gaz produit est alors extrait simultanément de la capacité 12 et de l'adsorbeur. Le volume de la capacité de stockage est donc artificiellement augmenté, et la baisse de pression durant cette phase peut être considérablement réduite.

L'augmentation de la pression haute du cycle nécessaire pour pouvoir utiliser la capacité de stockage nominale est alors très sensiblement réduite.

Bien entendu, le procédé suivant l'invention est compatible avec les diverses variantes du cycle de la Figure 2 qui ont été proposées pour s'adapter au mieux aux conditions économiques, à la pureté de l'oxygène produit, à la nature des adsorbants, etc. Ces variantes sont en particulier :

- la recompression simultanée à co-courant par de l'air pendant au moins une partie de l'étape (a1);
- la recompression simultanée à contre-courant avec de l'oxygène pendant au moins une partie de l'étape (a2);
- une dépressurisation simultanée à contre-courant pendant au moins une partie de l'étape (c1).

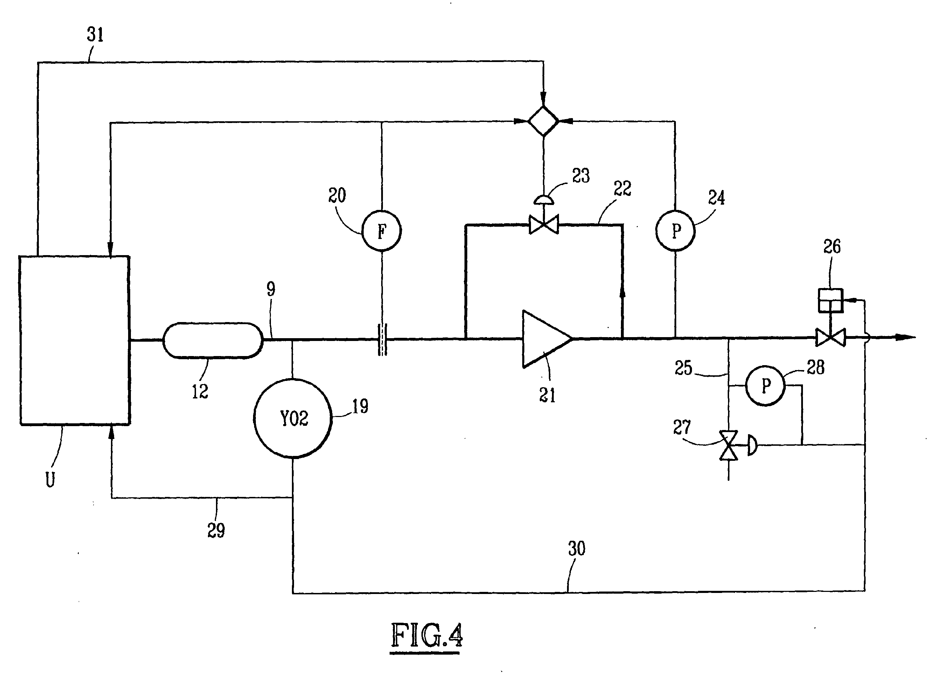

La Figure 4 représente schématiquement un exemple d'équipement de la conduite 9, pour la régulation de l'oxygène délivré à l'utilisateur, dans le cas où l'on travaille avec une correction de la valeur calculée de ΔT comme expliqué plus haut.

Sur la Figure 4, on a désigné l'ensemble de l'unité PSA par U. La conduite 9 est équipée, à partir de la sortie de la capacité 12 : d'un analyseur de teneur en oxygène 19; d'un débitmètre 20; d'un compresseur d'oxygène 21 à débit constant muni d'un by-pass de recyclage 22 lui-même commandé par une vanne 23; d'un manomètre 24; d'un piquage de mise à l'air 25; et d'une vanne d'isolement 26.

Le piquage 25 est commandé par une vanne 27 associée à un manomètre 28.

La sortie de l'analyseur 19 est reliée via une ligne 29 à l'automate de commande de l'unité U, pour réaliser la correction de ΔT précitée, et via une ligne 30 aux vannes 26 et 27. La sortie du débitmètre 20 est reliée audit automate et à la vanne 23, et celle du manomètre 24 à cette dernière.

La régulation du débit d'oxygène est obtenue au moyen de la vanne 23, qui recycle un débit variable à l'aspiration du compresseur. Cette régulation est effectuée principalement à partir de la pression relevée en 24.

Le débitmètre 20 sert d'une part à fournir l'indication de débit qui permet de modifier la durée du cycle via la formule (2) ci-dessus, et d'autre part à limiter le débit consommé par l'utilisateur en cas de surconsommation.

De plus, afin d'améliorer la stabilité de la production envoyée au consommateur, la vanne 23 reçoit également des ordres de modification de position en boucle ouverte, via une ligne 31, en provenance de l'automate de l'unité U.

Ainsi, l'ouverture de la vanne 23 est augmentée pendant les étapes (b1) et (b2) décrites plus haut. De cette manière, le manomètre 24 ne commande que des variations d'ouverture par rapport aux valeurs théoriques. Cette boucle ouverte permet d'anticiper les évolutions de pression dues au déroulement du cycle.

La vanne 27 est ouverte et la vanne 26 fermée lors du démarrage de l'unité U, jusqu'à obtention de la pureté d'oxygène désirée. La vanne 27 s'ouvre également lorsque la pression détectée en 28 dépasse un seuil haut prédéterminé.

De façon générale, les liaisons entre instruments (capteur de pression débitmètre...) et équipements (vannes 23, 26,...) peuvent être directes ou passer par l'automate de l'unité U ou par un automate spécialisé.

## Revendications

1.  Procédé de traitement d'un mélange gazeux par adsorption à modulation de pression (Pressure Swing Adsorption ou PSA), du type dans lequel on utilise au moins deux adsorbeurs et où on effectue, dans chaque adsorbeur (1A; 1B), pour une production nominale donnée, un cycle comprenant les étapes successives suivantes :

    - une phase (b) de production par admission à co-courant du mélange gazeux dans l'adsorbeur et récupération d'une fraction enrichie en composés les moins adsorbables pour fourniture à une conduite de gaz de production, phase au cours de laquelle la pression maximale PM du cycle est atteinte;
    - une phase (c) de régénération comportant au moins une étape de dépressurisation incluant une étape d'équilibrage avec un autre adsorbeur en phase de repressurisation et au cours de laquelle est attente la pression minimale Pm du cycle; et
    - une phase (a) de repressurisation de l'adsorbeur jusqu'à la pression initiale de la phase de production;

    l'une au moins des pressions extrêmes PM et Pm du cycle étant sensiblement différente de la pression atmosphérique,
    dans lequel, lors d'une réduction du débit de production, on ajoute au cycle, au moins un temps mort (TM1, TM2) au cours duquel l'adsorbeur (1A; 1B) est isolé,
    **caractérisé en ce que** le temps mort (TM1 ; TM2) est ajouté sensiblement à au moins une des pressions extrêmes (PM et ou Pm) du cycle.

2.  Procédé suivant la revendication 1, **caractérisé en ce que**, lors de ladite réduction de débit, on ajoute un temps mort (TM1) sensiblement à la pression maximale PM du cycle.

3.  Procédé suivant la revendication 2, **caractérisé en ce que**, lors de ladite réduction de débit, on ajoute un temps mort (TM1) immédiatement à la suite de la phase de production (b).

4.  Procédé selon l'une des revendications 1 à 3, **caractérisé en ce que** la phase (c) de régénération comprend une première étape de décompression équilibrage à co-courant et une deuxième étape de décompression à contre courant.

5.  Procédé suivant l'une des revendications 1 à 4, **caractérisé en ce que**, lors de ladite réduction de débit, on ajoute un temps mort (TM2) sensiblement à la pression minimale Pm du cycle.

6.  Procédé suivant la revendication 5, **caractérisé en ce que**, lors de ladite réduction de débit, on ajoute un temps mort (TM2) immédiatement avant la phase de repressurisation (a).

7.  Procédé suivant l'une des revendications 1 à 6, **caractérisé en ce qu'**on surveille la pression de l'adsorbeur (1A, 1B) pendant au moins un des dits temps morts (TM1, TM2) d'au moins certains cycles.

8.  Procédé suivant la revendication 7, dans lequel ladite fraction enrichie est envoyée à une capacité-tampon de production (12), **caractérisé en ce qu'**on surveille la pression de la capacité-tampon en même temps que la pression de l'adsorbeur (1A, 1B).

9.  Procédé suivant l'une des revendications 1 à 8 , **caractérisé en ce qu'**il utilise deux adsorbeurs et **en ce que**, lors de ladite réduction du débit de production, on ajoute au cycle deux temps morts concomitants (TM1, TM2) ayant la même durée.

**10.** Procédé selon la revendication 9, **caractérisé en ce qu'**il comprend un étage d'équilibrage partiel (C1, A1) entre les deux adsorbeurs à partir de leurs pressions extrêmes respectives ($P_M$, $P_m$).

**11.** Procédé suivant l'une des revendications 1 à 10, **caractérisé en ce qu'**on calcule la durée totale ∆T du ou des temps morts (TM1, TM2) par la formule :

$$\Delta T \ = \ T\,(DN-DR)\,/DR$$

où T est la durée nominale du cycle, DN le débit nominal de production et DR le débit réduit de production.

**12.** Procédé suivant la revendication 11, **caractérisé en ce qu'**on mesure la pureté de ladite fraction enrichie pour le débit de production réduit, et, en cas de variation excessive par rapport à la pureté nominale, on corrige ladite durée totale ∆T dans le sens qui tend à annuler cette variation.

**13.** Procédé suivant l'une des revendications 1 à 12, **caractérisé en ce que** la pression maximale PM du cycle est comprise entre 1,2 et 3 bars, et plus particulièrement entre 1,35 et 1,85 bar, et la pression minimale Pm du cycle est comprise dans la plage 0,20 à 0,65 bar et plus particulièrement dans la plage 0,3 à 0,50 bar.

**14.** Procédé selon l'une des revendications précédentes, **caractérisé en ce que** le mélange gazeux est l'air et la fraction de production l'oxygène.

**Claims**

**1.** Method of treating a gas mixture by PSA (pressure swing adsorption), of the type in which at least two adsorbers are used and in which, in each adsorber (1A; 1B), for a given nominal production, a cycle comprising the following successive steps is carried out:

- a production phase (b) by cocurrently admitting the gas mixture into the adsorber and by recovering a fraction enriched with the least adsorbable compounds for delivery to a production gas line, during which phase the maximum pressure $P_{max}$ of the cycle is reached;
- a regeneration phase (c) comprising at least one depressurization step, which includes a step of equilibration with another adsorber in the repressurization phase, and during which the minimum pressure $P_{min}$ of the cycle is reached; and
- a repressurization phase (a) in which the adsorber is repressurized up to the initial pressure of the production phase,

at least one of the extreme pressures $P_{max}$ and $P_{min}$ of the cycle being substantially different from atmospheric pressure and in which, during a reduction in the production output, at least one dead time ($T_{d1}$; $T_{d2}$), during which the adsorber (1A; 1B) is isolated, is added to the cycle,
**characterized in that** the dead time ($T_{d1}$; $T_{d2}$) is added substantially to at least one of the extreme pressures ($P_{max}$ and/or $P_{min}$) of the cycle.

**2.** Method according to Claim 1, **characterized in that**, during the said reduction in output, a dead time ($T_{d1}$) is added substantially to the maximum pressure $P_{max}$ of the cycle.

**3.** Method according to Claim 2, **characterized in that**, during the said reduction in output, a dead time ($T_{d1}$) is added immediately after the production phase (b) .

**4.** Method according to one of Claims 1 to 3, **characterized in that** the regeneration phase (c) comprises a cocurrent equilibration first decompression step and a countercurrent decompression second step.

**5.** Method according to one of Claims 1 to 4, **characterized in that**, during the said reduction in output, a dead time ($T_{d2}$) is added substantially to the minimum pressure $P_{min}$ of the cycle.

**6.** Method according to Claim 5, **characterized in that**, during the said reduction in output, a dead time ($T_{d2}$) is added immediately before the repressurization phase (a).

7. Method according to one of Claims 1 to 6, **characterized in that** the pressure of the adsorber (1A, 1B) is monitored during at least one of the said dead times ($T_{d1}$, $T_{d2}$) of at least certain cycles.

8. Method according to Claim 7, in which the said enriched fraction is sent to a production buffer tank (12), **characterized in that** the pressure of the buffer tank is monitored at the same time as the pressure of the adsorber (1A, 1B).

9. Method according to one of Claims 1 to 8, **characterized in that** it uses two adsorbers and **in that**, during the said reduction in the production output, two concomitant dead times ($T_{d1}$, $T_{d2}$) having the same duration are added to the cycle.

10. Method according to Claim 9, **characterized in that** it includes a partial equilibration stage (C1, A1) for equilibration between the two adsorbers on the basis of their respective extreme pressures ($P_{max}$, $P_{min}$).

11. Method according to one of Claims 1 to 10, **characterized in that** the total duration $\Delta t$ of the dead time or times ($T_{d1}$, $T_{d2}$) is calculated by the formula:

$$\Delta T = T (Q_n - Q_r)/Q_r$$

where T is the nominal duration of the cycle, $Q_n$ is the nominal production output and $Q_r$ is the reduced production output.

12. Method according to Claim 11, **characterized in that** the purity of the said enriched fraction is measured in the case of the reduced production output and, in the event of an excessive variation from the nominal purity, the said total duration $\Delta t$ is corrected in the direction tending to eliminate this variation.

13. Method according to one of Claims 1 to 12, **characterized in that** the maximum pressure $P_{max}$ of the cycle is between 1.2 and 3 bar, more particularly between 1.35 and 1.85 bar, and the minimum pressure $P_m$ of the cycle lies within the 0.20 to 0.65 bar range and more particularly in the 0.3 to 0.50 bar range.

14. Method according to one of the preceding claims, **characterized in that** the gas mixture is air and the production fraction is oxygen.

**Patentansprüche**

1. Verfahren zur Behandlung eines Gasgemisches durch Druckwechseladsorption (Pressure Swing Adsorption oder PSA), bei dem mindestens zwei Adsorber verwendet werden und in jedem Adsorber (1A, 1B) für eine gegebene Nominalproduktion ein Zyklus durchgeführt wird, umfassend die folgenden aufeinander folgenden Schritte:

   - eine Produktionsphase (b) durch Einleiten des Gasgemisches bei Mitstrom in den Adsorber und Wiedergewinnung einer an den am wenigsten adsorbierbaren Verbindungen angereicherten Fraktion, um sie an eine Produktionsgasleitung zu liefern, wobei während dieser Phase der Maximaldruck PM des Zyklus erreicht wird;
   - eine Regenerationsphase (c), umfassend mindestens einen Schritt der Druckminderung, einschließlich eines Schrittes des Ausgleichs mit einem weiteren Adsorber in der Druckerhöhungsphase, während der der Minimaldruck Pm des Zyklus erreicht wird; und
   - eine Phase (a) zur Druckerhöhung des Adsorbers bis zu einem Anfangsdruck der Produktionsphase;

   wobei sich mindestens einer der äußersten Druckwerte PM und Pm des Zyklus wesentlich vom Luftdruck unterscheidet, bei dem bei einer Verringerung der Produktionsmenge zu dem Zyklus mindestens eine Stillstandszeit (TM1; TM2) hinzugefügt wird, während der der Adsorber (1A; 1B) isoliert wird, **dadurch gekennzeichnet, dass** die Stillstandszeit (TM1; TM2) im Wesentlichen bei mindestens einem der äußersten Druckwerte (PM und/oder Pm) des Zyklus hinzugefügt wird.

2. Verfahren nach Anspruch 1, **dadurch gekennzeichnet, dass** bei der Verringerung der Produktionsmenge eine Stillstandszeit (TM1) im Wesentlichen beim Maximaldruck PM des Zyklus hinzugefügt wird.

3. Verfahren nach Anspruch 2, **dadurch gekennzeichnet, dass** bei der Verringerung der Produktionsmenge eine Stillstandszeit (TM1) unmittelbar nach der Produktionsphase (b) hinzugefügt wird.

4. Verfahren nach einem der Ansprüche 1 bis 3, **dadurch gekennzeichnet, dass** die Regenerationsphase (c) einen ersten Schritt der Druckminderung durch Ausgleich bei Mitstrom und einen zweiten Schritt der Druckminderung bei Gegenstrom umfasst.

5. Verfahren nach einem der Ansprüche 1 bis 4, **dadurch gekennzeichnet, dass** bei der Produktionsverringerung eine Stillstandszeit (TM2) im Wesentlichen beim Minimaldruck Pm des Zyklus hinzugefügt wird.

6. Verfahren nach Anspruch 5, **dadurch gekennzeichnet, dass** bei der Produktionsverringerung eine Stillstandszeit (TM2) unmittelbar vor der Phase der Druckerhöhung (a) hinzugefügt wird.

7. Verfahren nach einem der Ansprüche 1 bis 6,
**dadurch gekennzeichnet, dass** der Druck des Adsorbers (1A, 1B) während mindestens einer der Stillstandszeiten (TM1, TM2) von mindestens gewissen Zyklen überwacht wird.

8. Verfahren nach Anspruch 7, bei dem die angereicherte Fraktion in eine Pufferproduktionskapazität (12) geschickt wird, **dadurch gekennzeichnet, dass** der Druck der Pufferkapazität gleichzeitig mit dem Druck des Adsorbers (1A, 1B) überwacht wird.

9. Verfahren nach einem der Ansprüche 1 bis 8, **dadurch gekennzeichnet, dass** es zwei Adsorber verwendet, und dass bei der Produktionsverringerung dem Zyklus zwei begleitende Stillstandszeiten (TM1, TM2) mit derselben Dauer hinzugefügt werden.

10. Verfahren nach Anspruch 9, **dadurch gekennzeichnet, dass** es einen Schritt des Teilausgleichs (C1, A1) zwischen den beiden Adsorbern auf Basis ihrer jeweiligen äußersten Druckwerte (PM, Pm) umfasst.

11. Verfahren nach einem der Ansprüche 1 bis 10, **dadurch gekennzeichnet, dass** die Gesamtdauer $\Delta T$ der Still-standszeit(en) (TM1, TM2) mit folgender Formel berechnet wird:

$$\Delta T = T\ (DN - DR)/DR$$

wobei T die Nominaldauer des Zyklus, DN die Nominalproduktionsmenge und DR die verringerte Produktionsmenge ist.

12. Verfahren nach Anspruch 11, **dadurch gekennzeichnet, dass** die Reinheit der angereicherten Fraktion für die verringerte Produktionsmenge gemessen wird, und im Falle einer übermäßigen Variation im Vergleich mit der Nominalreinheit die Gesamtdauer $\Delta T$ in die Richtung, die dazu neigt, die Variation zu beseitigen, korrigiert wird.

13. Verfahren nach einem der Ansprüche 1 bis 12, **dadurch gekennzeichnet, dass** der Maximaldruck PM des Zyklus zwischen 1, 2 und 3 bar und insbesondere zwischen 1,35 und 1,85 bar und der Minimaldruck Pm des Zyklus in dem Bereich von 0,20 bis 0,65 bar und insbesondere von 0,3 bis 0,50 bar liegt.

14. Verfahren nach einem der vorhergehenden Ansprüche, **dadurch gekennzeichnet, dass** das Gasgemisch Luft und die Produktionsfraktion Sauerstoff ist.

FIG.1

FIG.2

FIG.3

EP 0 988 883 B1

FIG.4

EP 0 988 883 B1